Europäisches Patentamt

European Patent Office

Office européen des brevets

(11) Veröffentlichungsnummer: **0 324 061 B1**

(12) **EUROPÄISCHE PATENTSCHRIFT**

(45) Veröffentlichungstag der Patentschrift: **24.06.92**

(21) Anmeldenummer: **88115644.2**

(22) Anmeldetag: **23.09.88**

(51) Int. Cl.⁵: **A47J 36/02**

(54) **Kochgeschirr.**

(30) Priorität: **13.01.88 DE 3800745**

(43) Veröffentlichungstag der Anmeldung:
**19.07.89 Patentblatt 89/29**

(45) Bekanntmachung des Hinweises auf die
Patenterteilung:
**24.06.92 Patentblatt 92/26**

(84) Benannte Vertragsstaaten:
**ES GR**

(56) Entgegenhaltungen:
EP-A- 0 111 867          EP-A- 0 221 848
FR-A- 1 565 416          FR-A- 2 119 440
FR-A- 2 449 428          FR-A- 2 453 627

(73) Patentinhaber: **FISSLER GMBH**
**Im Wörth 2 Postfach 12 23 20**
**W-6580 Idar-Oberstein 2(DE)**

(72) Erfinder: **Bessenbach, Hans, Dipl.-Ing. Keil &**
**Schaafhausen**
**Patentanwälte Eysseneckstrasse 31**
**W-6000 Frankfurt am Main 1(DE)**
Erfinder: **Crummenauer, Michael Keil &**
**Schaafhausen**
**Patentanwälte Eysseneckstrasse 31**
**W-6000 Frankfurt am Main 1(DE)**

(74) Vertreter: **Keil, Rainer A., Dipl.-Phys. Dr. et al**
**KEIL & SCHAAFHAUSEN Patentanwälte Eys-**
**seneckstrasse 31**
**W-6000 Frankfurt am Main 1(DE)**

## Beschreibung

Die Erfindung bezieht sich auf ein Kochgeschirr, z.B. einen Topf oder eine Pfanne, mit einem Behälterteil aus nichtrostendem Stahl vergleichsweise geringer Wandstärke und einer vergleichsweise dicken Bodenplatte aus Aluminium od. dgl. gut wärmeleitfähigem Material auf der Bodenaußenseite des Behälterteils sowie mit einer wenigstens teilweise aus magnetisierbarem Nickel enthaltenden Material bestehenden Bodenscheibe auf der Außenseite der Bodenplatte.

Geschirre aus nichtrostendem Stahl für Gas- oder Elektroherde sind wegen dauerhafter Gebrauchsfähigkeit, guter Reinigungsmöglichkeit und ansprechendem Aussehen bspw. gegenüber emaillierten Töpfen sehr geschätzt. Da rostfreier Stahl jedoch verhältnismäßig geringe Wärmeleitfähigkeit hat, ist der Behälterteil vergleichsweise geringer Wandstärke des Kochgeschirrs üblicherweise mit einer vergleichsweise dicken Bodenplatte aus Aluminium od. dgl. gut wärmeleitfähigem Material versehen. Die Bodenplatte gewährleistet wegen ihrer guten Wärmeleitfähigkeit auch bei nur lokaler Erhitzung ein über die gesamte Bodeninnenfläche gleichmäßiges Garen. Die Bodenplatte aus Aluminium od. dgl. gut wärmeleitfähigem Material weist bei einem Kochgeschirr nach der DE-A-2 258 795 auf ihrer Außenseite eine Schutzverkleidung aus nichtrostendem Stahl auf, deren Merkmale mit denjenigen des Behälterteils identisch sind.

Kochgeschirre der genannten Art bestehen üblicherweise aus austenitischem Stahl; sie sind für die Verwendung auf sogenannten Induktionsherden, also für eine Erwärmung des Kochgeschirrs und damit des Kochgutes mit Hilfe magnetischer Wechselfelder nicht geeignet, da Stähle mit austenitischem Gefüge nicht oder nur gering magnetisierbar sind.

In der nicht vorveröffentlichten DE-A-3 634 841 ist ein Edelstahlkochgeschirr vorgeschlagen, welches zum Zweck der Eignung nicht nur für das Kochen auf Gas- oder Elektroheizplatten, sondern auch auf Induktionsherden eine Bodenscheibe aufweist, die aus einer Zwischenschicht aus ferritischem Stahl besteht, die von Außenschichten aus austenitischem Stahl begrenzt ist. Diese Lösung ist wegen der dreischichtigen Bodenscheibe verhältnismäßig aufwendig.

In der nicht vorveröffentlichten DE-A-3 639 013 ist ferner ein nicht nur für Gas- und Elektroheizplatten, sondern auch für Induktionsherde geeignetes Kochgeschirr vorgeschlagen. Dabei befindet sich auf der Außenseite einer Bodenscheibe aus Aluminium od. dgl. gut wärmeleitfähigem Material eine Bodenscheibe aus austenitischem Stahl, auf deren Außenseite wiederum ein magnetisierbares Material sehr geringer Dicke aufgebracht ist.

Aus der FR-A-2 453 267 ist ein Küchengeschirr, z.B. eine Kasserole, dessen bzw. deren Boden aus mindestens drei Schichten besteht, nämlich einer mittleren Schicht aus einem gut wärmeleitfähigem Material, wie Kupfer oder Aluminium, einer oberen Schicht aus nichtrostendem austenitischem Stahl mit bspw. 18 % Chrom und 8 % Nickel und einer unteren Schicht aus Nickel oder einer Eisenlegierung mit Nickel und/oder Kobalt, bekannt. Hiermit läßt sich nicht ohne weiteres ein für Induktionsherde geeignetes Geschirr mit hinreichend eben bleibender Bodenaufstandsfläche herstellen.

Aus der EP-A-0 221 848 ist ein Kochgefäß bestehend aus einer Schale mit einer Wand und einem Boden bekannt, an dem eine gut wärmeleitende Platte befestigt ist. Die Bodenplatte ist von einer Schutzwand aus Verbundmaterial versehen, welches eine Außenschicht aus rostfreiem Metall, eine Mittelschicht aus ferromagnetischem Material und eine innere Schicht aus rostfreiem Stahl hat. Durch diese Ausbildung soll das Kochgefäß sowohl für Induktionsbeheizung als auch für konventionelle Elektroplatten, Keramikkochfelder oder für Gasherde geeignet sein. Es hat sich jedoch gezeigt, daß auch hier eine optimale Befriedigung der an derartige Kochgefäße gestellten verschiedenartigen Anforderungen hinsichtlich Einfachheit der Herstellung, wirksamer Induktionsbeheizung und Ebenheit der Bodenaufstandsfläche noch nicht erreicht werden konnte.

Aufgabe der vorliegenden Erfindung ist es, ein Kochgeschirr der eingangs genannten Art vorzuschlagen, welches bei einfacherer Herstellung und wirksamerem Einsatz auf einem Induktionsherd bei Erhitzung zuverlässig eine ebene Aufstandsfläche behält, so daß ein Einsatz auf einer Elektroplatte bei guter und gleichmäßiger Wärmeübertragung möglich bleibt.

Diese Aufgabe wird erfindungsgemäß dadurch gelöst, daß die Bodenscheibe im wesentlichen aus einer Nickellegierung besteht oder wenigstens eine Zwischenschicht aus einer Nickellegierung aufweist, wobei die Nickellegierung folgende Analyse aufweist: Ni: 70 bis 80%, vorzugsweise etwa 75%; Cr: 1 bis 3%, vorzugsweise etwa 2%; Cu: 3 bis 7%, vorzugsweise etwa 5%; Mn: 0,3 bis 0,7%, vorzugsweise etwa 0,5%, Si: 0,1 bis 0,3%, vorzugsweise etwa 0,2%; C: 0,001 bis 0,01%, vorzugsweise etwa 0,02% und Rest Fe, oder folgende Analyse: Ni: 75 bis 85%, vorzugsweise etwa 80%; Mo: 4 bis 6%, vorzugsweise etwa 5%; Mn: 0,3 bis 0,7%, vorzugsweise etwa 0,5%; Si: 0,2 bis 0,4%, vorzugsweise etwa 0,3%; C: 0,001 bis 0,01%, vorzugsweise etwa 0,02% und Rest Fe.

Es hat sich überraschenderweise gezeigt, daß bei einer solchen Bodenschichtkonstruktion aufgrund des Bimetalleffektes und/oder der Mischausdehnung bei Erhitzung eine Kompensation in der Weise erfolgt, daß die Aufstandsfläche des Bodens zuverlässig eben bleibt. Die genannten Nickellegierungen haben zudem eine sehr hohe magnetische Permeabilität, so daß bei verhältnismäßig geringer Schichtdicke ein wirksamer Einsatz auf Induktionsherden möglich ist. Somit ergeben sich besonders günstige Ergebnisse hinsichtlich Magnetisierungsverhalten unter den von üblichen Induktionsherden angebotenen Magnetfeldern, Dehnungsverhalten unter Berücksichtigung des übrigen Materials des Behälterbodens und Korrosionsbeständigkeit. Die Nickellegierungen lassen sich außerdem gut verformen und insbesondere gut Plattieren, was zu einer kostengünstigen Herstellung führt. Ferner weisen erfindungsgemäße Bodenscheiben eine gute Korrosionsbeständigkeit auf.

Bei einer besonderen Ausgestaltung des Erfindungsgedankens kann die Bodenplatte aus einer Zwischenschicht aus einer der Nickellegierungen und einer Außenschicht aus nichtrostendem Stahl bestehen, die als Schutzschicht dient.

Die im wesentlichen aus einer der Nickellegierungen bestehende Bodenscheibe bzw. die Zwischenschicht aus einer der Nickellegierungen haben vorzugsweise eine Stärke zwischen etwa 0,2 und 2 mm.

Es hat sich ferner als günstig erwiesen, wenn die Bodenscheibe eine Stärke hat, die etwa der Wandstärke des Behälterteils entspricht.

Die Bodenplatte kann bspw. auf der Bodenaußenseite des Behälterteils und ggf. auch die Bodenscheibe auf der Außenseite der Bodenplatte mit Hilfe des an sich bekannten Schlagpressens bei erhöhter Temperatur, vorzugsweise unter Zwischenlage je einer Folie aus Aluminium od. dgl. gut wärmeleitfähigem Material festgelegt sein.

Die vergleichsweise dicke Bodenplatte aus Aluminium od. dgl. gut wärmeleitfähigem Material dient bei der herkömmlichen Beheizung mit Gas- oder Elektroheizplatte in der bekannten Weise der Vergleichmäßigung der Wärmezufuhr in das Kochgeschirrinnere. Bei der induktiven Beheizung übernimmt die Bodenplatte nun zusätzlich die Funktion eines Dämpfungsgliedes. Bekanntlich verschwindet die Wärmezufuhr bei einem Induktionsherd unmittelbar mit dem Abschalten des magnetischen Wechselfeldes und der Geschirrboden würde ohne die vergleichsweise dicke Bodenplatte aus Aluminium od. dgl. gut wärmeleitfähigem Material sofort abkühlen, so daß häufige Schaltvorgänge des Induktionsherdes erforderlich wären, um das Kochgut in dem Kochgeschirr auf einer konstanten Temperatur zu halten. Die vergleichsweise dicke Bodenplatte aus Aluminium od. dgl. gut wärmeleitfähigem Material dient jedoch als Wärmespeicher, so daß das Ein- und Ausschalten des Induktionsherdes zur Aufrechterhaltung einer verhältnismäßig gleichmäßigen Kochtemperatur nur in größeren zeitlichen Abständen erforderlich ist. Dies ist insbesondere wichtig in bezug auf die Zulassungsvorschriften für Induktionsherde, die vorsehen, daß innerhalb einer vorgegebenen Zeiteinheit eine bestimmte Zahl von Schaltvorgängen nicht überschritten werden darf. Mit der Erfindung werden andererseits trotz der vergleichsweise dicken Bodenplatte aus Aluminium od. dgl. gut wärmeleitfähigem Material die Vorteile eines schnellen Aufheizens, welche mit dem induktiven Kochen verbunden sind, im wesentlichen aufrecht erhalten.

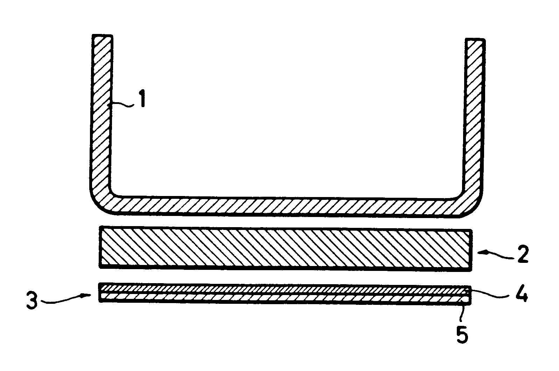

Anhand der Zeichnung wird nachfolgend ein Ausführungsbeispiel der Erfindung näher erläutert.

Die einzige Figur veranschaulicht schematisch die wesentlichen Bestandteile eines die Erfindung aufweisenden induktionsherdgeeigneten Kochgeschirrs in Form eines Topfes vor dem Zusammenfügen.

Das Kochgeschirr hat einen Behälterteil 1 aus dem üblichen nichtrostenden austenitischen Stahl (z.B. Nr. 1.4301 nach DIN 17007) mit einer Wandstärke von bspw. zwischen etwa 0,8 und 1,0 mm. Auf der Bodenseite des Behälterteils 1 wird eine Bodenplatte 1 aus Aluminium, einer Aluminiumlegierung oder einem anderen gut wärmeleitfähigem Material mit einer Stärke von einigen Millimetern festgelegt. Auf der Außenseite der Bodenscheibe 2 wird eine Bodenscheibe 3 aufgebracht, die erfindungsgemäß im wesentlichen aus einer Nickellegierung oder, wie dargestellt, aus einer Zwischenschicht 4 aus einer Nickellegierung und einer Außenschicht 5 aus nichtrostendem Stahl besteht. Die im wesentlichen aus einer Nickellegierung bestehende Bodenscheibe 3 bzw. die Zwischenschicht 4 aus einer Nickellegierung haben eine Stärke zwischen etwa 0,2 und 2 mm. Vorzugsweise entspricht die Stärke der Bodenscheibe 2 etwa der Wandstärke des Behälterteils 1. Insbesondere die Aufbringung der Bodenplatte 2 auf die Bodenaußenseite des Behälterteils 1 kann durch Zwischenlage einer Aluminiumfolie bspw. eine Dicke zwischen 0,02 und 0,1 mm unter Anwendung des aus der DE-A-2 207 448 an sich bekannten Stoßdruckschweißens unter erhöhter Temperatur erfolgen, wobei vorzugsweise Stoßdrücke zwischen etwa 1.000 und 1.500 kg/cm$^2$ und Temperaturen zwischen etwa 300 und 500°C angewendet werden. Die im wesentlichen aus einer Nickellegierung bestehende Bodenscheibe 3 bzw. die Zwischenschicht 4 aus einer Nickellegierung kann entweder auf die Unterseite der Bodenplatte 2 oder die Innenseite der Außenschicht 5 aus nichtrostendem Stahl aufplattiert werden.

Bezugszeichenliste:

1. Behälterteil

2. Bodenplatte
3. Bodenscheibe
4. Zwischenschicht
5. Außenschicht

**Patentansprüche**

1. Kochgeschirr, z.B. Topf oder Pfanne, mit einem Behälterteil (1) aus nichtrostendem Stahl vergleichsweise geringer Wandstärke und einer vergleichsweise dicken Bodenplatte (2) aus Aluminium od. dgl. gut wärmeleitfähigem Material auf der Bodenaußenseite des Behälterteils (1) sowie mit einer wenigstens teilweise aus magnetisierbarem Nickel enthaltenden Material bestehenden Bodenscheibe (3) auf der Außenseite der Bodenplatte (2), dadurch gekennzeichnet, daß die Bodenscheibe (3) im wesentlichen aus einer Nickellegierung besteht oder wenigstens eine Zwischenschicht (4) aus einer Nickellegierung aufweist, wobei die Nickellegierung folgende Analyse aufweist: Ni: 70 bis 80 %, vorzugsweise etwa 75 %; Cr: 1 bis 3 %, vorzugsweise etwa 2 %; Cu: 3 bis 7 %, vorzugsweise etwa 5 %; Mn: 0,3 bis 0,7 %, vorzugsweise etwa 0,5 %; Si: 0,1 bis 0,3 %, vorzugsweise etwa 0,2 %; C: 0,001 % bis 0,01 %, vorzugsweise etwa 0,02 % und Rest Fe.

2. Kochgeschirr, z.B. Topf oder Pfanne, mit einem Behälterteil (1) aus nichtrostendem Stahl vergleichsweise geringer Wandstärke und einer vergleichsweisen dicken Bodenplatte (2) aus Aluminium od. dgl. gut wärmeleitfähigem Material auf der Bodenaußenseite des Behälterteils (1) sowie mit einer wenigstens teilweise aus magnetisierbarem Nickel enthaltenden Material bestehenden Bodenscheibe (3) auf der Außenseite der Bodenplatte (2), dadurch gekennzeichnet, daß die Bodenscheibe (3) im wesentlichen aus einer Nickellegierung besteht oder wenigstens eine Zwischenschicht (4) aus einer Nickellegierung aufweist, wobei die Nickellegierung folgende Analyse aufweist: Ni: 75 bis 85 %, vorzugsweise etwa 80 %; Mo: 4 bis 6 %, vorzugsweise etwa 5 %; Mn: 0,3 bis 0,7 %, vorzugsweise etwa 0,5 %; Si: 0,2 bis 0,4 %, vorzugsweise etwa 0,3 %; C: 0,001 bis 0,01 %, vorzugsweise etwa 0,02 % und Rest Fe.

3. Kochgeschirr nach Anspruch 1 oder 2, dadurch gekennzeichnet, daß die Bodenscheibe (3) aus einer Zwischenschicht (4) aus einer der Nickellegierungen und einer Außenschicht (5) aus nichtrostendem Stahl besteht.

4. Kochgeschirr nach einem der Ansprüche 1 bis 3, dadurch gekennzeichnet, daß die im wesentlichen aus einer der Nickellegierungen bestehende Bodenscheibe (3) bzw. die Zwischenschicht (4) aus einer der Nickellegierungen eine Stärke zwischen etwa 0,2 und 2 mm hat.

5. Kochgeschirr nach einem der Ansprüche 1 bis 4, dadurch gekennzeichnet, daß die Bodenscheibe (3) eine Stärke hat, die etwa der Wandstärke des Behälterteils (1) entspricht.

6. Kochgeschirr nach einem der Ansprüche 1 bis 5, dadurch gekennzeichnet, daß die Bodenplatte (2) auf der Bodenaußenseite des Behälterteils (1) und ggf. die Bodenscheibe (3) auf der Außenseite der Bodenplatte (2) mit Hilfe des an sich bekannten Schlagpressens bei erhöhter Temperatur, vorzugsweise unter Zwischenlage je einer Folie (6) aus Aluminium od. dgl. gut wärmeleitfähigem Material festgelegt ist bzw. sind.

**Claims**

1. A cooking utensil, e.g. a pot or a fry pan, with a container liner (1) of stainless steel, with comparatively low wall thickness and a comparatively thick bottom plate (2) of aluminum or a material of similarly good heat-conducting properties on the outside of the bottom of the container liner (1) as well as with a bottom disk (3) on the outside of the bottom plate (2) that is at least partially composed of magnetizable nickel-comprising material, characterized in, that the bottom disk (3) essentially consists of a nickel alloy or at least comprises an intermediate layer (4) of a nickel alloy, wherein the nickel alloy shows the following composition: Ni: 70 to 80 %, preferably approximately 75 %; Cr: 1 to 3 %, preferably approximately 2 %; Cu: 3 to 7 %, preferably approximately 5 %; Mn: 0,3 to 0,7 %, preferably approximately 0,5 %; Si: 0,1 to 0,3 %, preferably approximately 0,2 %; C: 0,001 % to 0,01 %, preferably approximately 0,02 % and rest Fe.

2. A cooking utensil, e.g. a pot or a fry pan, with a container liner (1) of stainless steel, with comparatively low wall thickness and a comparatively thick bottom plate (2) of aluminum or a material of similarly good heat-conducting properties on the outside of the bottom of the container liner (1) as well as with a bottom disk (3) on the outside of the bottom plate (2) that is at least partially composed of magnetizable nickel-comprising material, characterized in, that the bottom disk (3) essentially consists of a nickel alloy or at least comprises an intermediate layer (4) of a nickel alloy, wherein the nickel alloy shows the following composition: Ni: 75 to 85 %, preferably approximately 80 %, Mo: 4 to 6 %, preferably approximately 5 %; Mn: 0,3 to 0,7 %, preferably approximately 0,5 %; Si: 0,2 to 0,4 %, preferably approximately 0,3 %; C: 0,001 to 0,01 %, preferably approximately 0,002 % and rest Fe.

3.  A cooking utensil according to claim 1 or 2, characterized in, that the bottom disk (3) consists of an intermediate layer (4) composed of one of the nickel alloya and an outer layer (5) composed of stainless steel.

4.  A cooking utensil according to any of the claims 1 to 3, characterized in, that the bottom disk (3) essentially composed of one of the nickel alloya or the intermediate layer (4) of one of the nickel alloys has a thickness of between approximately 0,2 and 2 mm.

5.  A cooking utensil according to any of the claims 1 to 4, characterized in, that the bottom disk (3) is of a thickness that is approximately equivalent to the wall thickness of the container liner (1).

6.  A cooking utensil according to any one of the claims 1 to 5, characterized in, that the bottom plate (2) on the outside of the bottom of the container liner (1) and possibly the bottom disk (3) on the outside of the bottom plate (2) is or are fixed with the help of the generally known impact-press technique at an increased temperature preferably with an intermediate foil (6) of aluminum or a material of similarly good heat-conducting properties.

**Revendications**

1.  Elément de batterie de cuisine, par exemple marmite ou poêle, comportant une partie récipient (1) en acier inoxydable avec une épaisseur de paroi relativement faible et une plaque de fond (2) relativement épaisse en aluminium ou en matériau présentant une conductibilité thermique analogue placée sur la face extérieure du fond de la partie récipient (1) ainsi qu'une semelle (3) formée au moins partiellement d'un matériau contenant du nickel magnétisable appliquée sur la face extérieure de la plaque de fond (2), caractérisé en ce que la semelle (3) est composée pour l'essentiel d'un alliage à base de nickel ou présente au moins une couche intermédiaire (4) en alliage à base de nickel, l'alliage à base de nickel ayant la composition suivante: Ni: 70 à 80%, de préférence 75% environ; Cr: 1 à 3%, de préférence 2% environ; Cu: 3 à 7%, de préférence 5% environ; Mn: 0,3 à 0,7%, de préférence 0,5% environ; Si: 0,1 à 0,3%, de préférence 0,2% environ; C: 0,001% à 0,01%, de préférence 0,02% environ, et reste Fe.

2.  Elément de batterie de cuisine, par exemple marmite ou poêle, comportant une partie récipient (1) en acier inoxydable avec une épaisseur de paroi relativement faible et une plaque de fond (2) relativement épaisse en aluminium ou en matériau présentant une conductibilité thermique analogue placée sur la face extérieure du fond de la partie récipient (1) ainsi qu'une semelle (3) formée au moins partiellement d'un matériau contenant du nickel magnétisable appliquée sur la face extérieure de la plaque de fond (2), caractérisé en ce que la semelle (3) est composée pour l'essentiel d'un alliage à base de nickel ou présente au moins une couche intermédiaire (4) en alliage à base de nickel, l'alliage à base de nickel ayant la composition suivante: Ni: 75 à 85%, de préférence 80% environ; Mo: 4 à 6%, de préférence 5% environ; Mn: 0,3 à 0,7%, de préférence 0,5% environ; Si: 0,2 à 0,4%, de préférence 0,3%; C: 0,001 à 0,01%, de préférence 0,02% environ et reste Fe.

3.  Elément de batterie de cuisine selon la revendication 1 ou 2, caractérisé en ce que la semelle (3) est constituée d'une couche intermédiaire (4) en l'un des alliages à base de nickel et d'une couche extérieure (5) en acier inoxydable.

4.  Elément de batterie de cuisine selon l'une des revendications 1 à 3, caractérisé en ce que la semelle (3) composée essentiellement d'un alliage à base de nickel ou la couche intermédiaire (4) en l'un des alliages à base de nickel a une épaisseur comprise entre 0,2 et 2 mm environ.

5.  Elément de batterie de cuisine selon l'une des revendications 1 à 4, caractérisé en ce que la semelle (3) a une épaisseur qui correspond sensiblement à l'épaisseur de paroi de la partie récipient (1).

6.  Elément de batterie de cuisine selon l'une des revendications 1 à 5, caractérisé en ce que la plaque de fond (2) est appliquée sur la face extérieure de la partie récipient (1) et éventuellement la semelle (3) est appliquée sur la face extérieure de la plaque de fond (2) par le procédé connu en soi du moulage par choc à température élevée, de préférence avec interposition chaque fois d'un film (6) d'aluminium ou de matériau ayant une conductibilité thermique équivalente.